# EUROPÄISCHE PATENTSCHRIFT

(11) **EP 0 515 905 B1**
(45) Veröffentlichungstag und Bekanntmachung des Hinweises auf die Patenterteilung: **20.03.1996**
(21) Anmeldenummer: 92108045.3
(22) Anmeldetag: 13.05.1992
(51) Int. Cl.: G01N 21/05, G01N 21/85

(54) **Anordnung zur Detektion von Kohlenwasserstoffen, insbesondere Oel, in wasserdurchströmten Rohrsystemen**
Device for the detection of hydrocarbons, especially oil, in water conveying pipework systems
Dispositif de détection d'hydrocarbures, en particulier d'huile, dans des systèmes de tuyaux parcourus par de l'eau

(30) Priorität: 27.05.1991 DE 4117243
(43) Veröffentlichungstag der Anmeldung: 02.12.1992
(73) Patentinhaber: GRUNDIG E.M.V. Elektro-Mechanische Versuchsanstalt Max Grundig GmbH & Co. KG, D-90762 Fürth (DE)
(72) Erfinder: Hallas, Ernst, Dr.rer.nat., Grundig E.M.V., W-8510 Fürth/Bay (DE)

(56) Entgegenhaltungen:
- EP-A- 0 203 600
- CH-A- 578 176
- GB-A- 1 221 066
- US-A- 4 156 143

## Beschreibung

Die Erfindung betrifft eine Anordnung zur Detektion von Kohlenwasserstoffen, insbesondere von Öl, in wasserdurchströmten Rohrsystemen durch die Bestimmung des Transmissionsverhaltens eines Lichtstrahles gemäß dem Oberbegriff des Anspruchs 1.

In vielen Industrie- oder Kraftwerksanlagen ist es notwendig geschlossene Rohrleitungssysteme, die vorwiegend Wasser führen, auf Verunreinigungen, insbesondere Öl, zu überprüfen. Derartige Überprüfungen sind notwendig, um Störungen, die gegebenenfalls Umweltschäden verursachen, möglichst frühzeitig erkennen zu können.

Zur Detektion von in Wasser enthaltenem Öl sind verschiedene Verfahren und Vorrichtungen bekannt, die auf der Basis von Absorptionsmessungen oder der Fluoreszenzwirkung beruhen.
So ist in der deutschen Offenlegungsschrift DE-A- 3020168 eine Vorrichtung zum Messen der Konzentration von in Flüssigkeiten enthaltenem Öl bekannt, bei der mittels einer Strahlungsquelle ultraviolettes Licht in die Flüssigkeit eingestrahlt wird, das Öl zur Fluoreszenz anregt. Diese Vorrichtung enthält weiterhin einen Detektor, der das Fluoreszenzlicht, das proportional zur Ölkonzentration ist, empfängt. Der mit Wechselspannung einer bestimmten Frequenz betriebene Ultraviolettstrahler und der für das Fluoreszenzlicht empfindliche Detektor liegen auf einer gemeinsamen Achse möglichst nahe an der zu messenden Flüssigkeit, wobei die UV-Strahlung senkrecht in die Flüssigkeit eindringt.

Ein Messystem zur Bestimmung von Öl in Wasser mit einer wasserdurchströmten Zelle, einem Halbleiterlaser und ein oder mehreren Photodetektoren wird in der deutschen Offenlegungsschrift DE-A- 2747698 beschrieben. In dieser Anordnung ist der Halbleiterlaser, der im Infrarotbereich betrieben wird, an einer Seite der Messzelle angebracht und die Photodetektoren sind unter einem bestimmten Winkel zum Laserstrahl angebracht, so daß sie das von den Öltröpfchen gestreute Laserlicht empfangen.

Der Nachtteil dieser Anordnungen besteht in der notwendigen hohen Empfindlichkeit der Detektoren, die nur durch aufwendige Verstärkungsmaßnahmen erreicht wird, da sowohl bei der Fluoreszenzwirkung als auch bei der Bestimmung des gestreuten Laserlichts keine definierte Richtung der zu empfangenden Lichstrahlung gegeben ist. Weiterhin beschreiben die bekannten Anordnungen Meßvorrichtungen, die eine Flüssigkeitsprobe untersuchen.

Es ist daher Aufgabe der Erfindung, eine Meßanordnung anzugeben, bei der die beschriebenen Nachteile nicht auftreten und die eine kontinuierliche Messung in einem Rohrleitungssystem ermöglicht.

Diese Aufgabe wird gemäß der Erfindung gelöst, indem in ein bestehendes Rohrleitungssystem eine rohrförmige Meßanordnung eingebracht wird. Diese Meßanordnung besteht aus einem innen verspiegelten Rohrteil, an dessen ersten Ende ein lichtdurchlässiges Fenster angebracht ist. An diesem Fenster ist ein Lichtsender, eine optische Anordnung und ein Photodetektor angebracht. Weiter ist der Photodetektor mit einer Auswerteeinheit verbunden. Neben dem verspiegelten Rohrteil enthält die rohrförmige Meßanordnung am zweiten Ende ein Rohrteil, das innen mit einer Retroreflexfolie ausgekleidet ist. Die Retroreflexfolie hat die Eigenschaft, daß ein unter einem bestimmten Winkel einfallender Lichtstrahl wieder in der Einfallsrichtung zurückgestreut und gleichzeitig geringfügig aufgeweitet wird.

Der vom Lichtsender abgegebene Lichtstrahl fällt unter einem durch die Anordnung des Lichtsenders bestimmbaren Winkel in das mit Wasser durchflossene Rohr ein und wird mehrfach an dem verspiegelten Rohrteil reflektiert, bis er in dem mit Retroreflexfolie ausgekleidetem Rohrteil angelangt. Von der Retroreflexfolie wird der Lichtstrahl in der Einfallsrichtung zurückreflektiert. Der zurücklaufende Lichtstrahl gelangt schließlich wieder an das Einfallsfenster und wird durch eine optische Anordnung, im einfachsten Fall eine Sammellinse, gebündelt und auf den Photodetektor gelenkt.
Während seiner Laufzeit durch das mit Wasser durchströmte Rohr verliert der Lichtstrahl durch Absorption an Lichtintensität. Befinden sich gelöste Kohlenwasserstoffe im Wasser, erhöht sich der durch Absorption verursachte Verlustanteil der Lichtintensität. Ein solcher Verlust wird durch die Auswerteeinheit erkannt, so daß in diesem Fall ein Alarm ausgelöst wird.

Der Vorteil der erfindungsgemäßen Anordnung liegt darin, daß nicht das sekundär durch Fluoreszenz erzeugte und ohne Vorzugsrichtung abgegebene beziehungsweise gestreute Licht, sondern das mehrfach reflektierte und durch Absorption in seiner Intensität abgeschwächte Licht gemessen wird. Dadurch werden aufwendige Verstärkungsmaßnahmen der empfangenen Signale überflüssig. Weiter kommt die Meßanordnung mit einem lichtdurchlässigen Fenster aus, durch das das Licht sowohl in das Meßrohr einfällt als auch wieder an den Photodetektor gelangt. Durch die mehrfache Reflexion des Lichtstrahles wird die Weglänge, die der Lichtstrahl durchläuft, erhöht und somit eine längere Absorptionsstrecke geschaffen, so daß auch bei einem geringen Anteil an Kohlenwasserstoffen bereits eine deutliche Erhöhung der Absorption gegeben ist, die eine leichte Auswertung ermöglicht.

In einer vorteilhaften Ausgestaltung der Erfindung wird die rohrförmige Meßanordnung direkt in das bestehende Rohrleitungssystem eingebracht. Auf diese Weise ist eine Probenentnahme überflüssig, so daß eine kontinuierliche Messung möglich wird.

In einer weiteren vorteilhaften Ausgestaltung der Erfindung wird die Meßanordnung als "Beipaß" an das bestehende Rohrleitungssystem angebracht. Auch hier wird eine kontinuierliche Messung ermöglicht.
Eine Erhöhung der Sicherheit bei der Auswertung und eine einfachere Auswertung des empfangenen Lichtstrahles ergibt sich, wenn der Lichtsender mit einer Lichtwellenlänge abstrahlt, die vorzugsweise von dem zu detektierenden Fremdstoff absorbiert wird. Im Falle der Detektion von Kohlenwasserstoffen beträtg die Lichtwellenlänge etwa 3,5 µm. Mit der Meßanordnung gemäß der Erfindung können aber auch andere Fremdstoffe detektiert werden, wobei die Lichtwellenlänge an die gegebenen Vorraussetzungen leicht angepaßt werden kann, wenn der Lichtsender und gegebenenfalls der Photodetektor ausgetauscht oder entsprechend angesteuert werden.

Vorteilhafterweise können hier auch breitbandige Lichtsender und Photodetektoren verwendet werden, wenn das lichtdurchlässige Fenster als Filter ausgebildet ist, das nur für bestimmte Frequenzen des Lichtes durchlässig ist.

Bei der selektiven Einstrahlung ergeben sich insbesondere Vorteile bei der Auswertung, da Störungen durch Störlichtstrahlung anderer Frequenzen keinen Eingang in die Meßergebnisse finden.

Bei der erfindungsgemäßen Anordnung wird die Länge des Rohrteiles, das mit der Retroreflexfolie ausgekleidet ist, in Abhängigkeit von der Rohrgeometrie und dem Einfallswinkel der Meßlichtstrahles gewählt, so daß für jeden Anwendungsfall eine optimale Anpassung an die vorgegebenen Bedingungen erreicht werden kann.

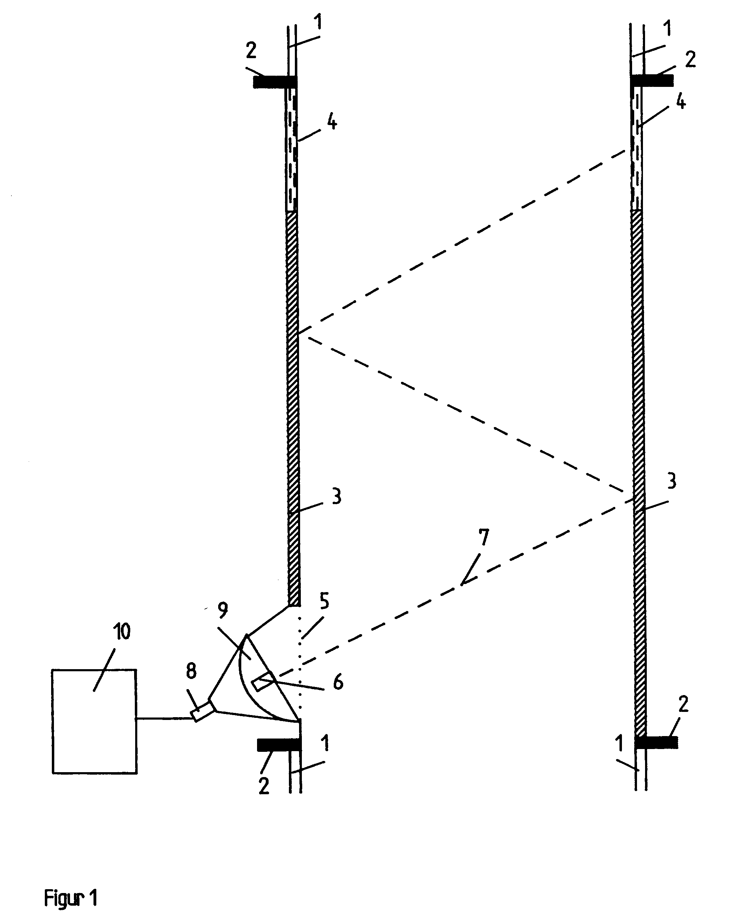

Im folgenden wird die Erfindung an Hand der Figur 1 beschrieben.

Diese Figur zeigt die in ein Rohr 1 eingebrachte Meßanordnung. Die Meßanordnung besteht aus einem rohrförmigen Teil, das sich aus einem innen verspiegelten Rohrteil 3 und einem mit Retroreflexfolie ausgekleideten Rohrteil 4 zusammensetzt. Am Ende des verspiegelten Rohrteiles ist ein lichtdurchlässiges Fenster 5 angebracht, an dem ein Lichtsender 6, eine Sammellinse 9 und ein Photodetektor 8 derart befestigt sind, daß der gesendete und der empfangene Lichtstrahl unter einem bestimmbaren Winkel in die rohrförmige Meßanordnung einstrahlt beziehungsweise von dort empfangen wird. Eine Auswerteeinheit 10 ist mit dem Photodetektor 8 verbunden. Die gesamte Meßanordnung ist mit geeigneten Verbindungsstücken 2, deren Ausführung von dem bestehenden Rohrsystem 1 abhängig ist, verbunden.
Bei der Bewertung von einzelnen Proben werden mittels der Verbindungsanschlüsse 2 Abdeckungen angebracht.
Vom Lichtsender 6 wird ein Lichtstrahl 7 in das Rohr eingestrahlt. Dieser Lichtstrahl 7 wird an der verspiegelten Rohrinnenfläche mehrfach reflektiert, bis er auf das mit Retroreflexfolie beschichtete Rohrteil 4 trifft, von wo er in der Einstrahlrichtung zurückreflektiert wird und nach Zurücklegen des gleichen Reflexionsweges wieder durch das lichtdurchlässige Fenster 5 und die Sammellinse 9 auf den Photodetektor 8 trifft. Auf der im Rohr zurückgelegten Strecke wird ein Teil des Lichtstrahles absorbiert, wobei die Absorption erhöht ist, wenn Kohlenwasserstoffe, insbesondere Öl, im Wasser vorhanden sind. Die Auswerteeinheit 10 bewertet die empfangene Lichtintensität. Bei einem Abfall der empfangenen Lichtintensität wird ein Alarm ausgelöst. Zu diesem Zweck kann ein optischer oder akkustischer Alarmgeber verwendet werden, der in der Figur 1 nicht dargestellt ist. Ein solcher Alarmgeber kann, in jedem Fachmann bekannter Weise, an die Auswerteeinheit angeschlossen werden.

## Patentansprüche

1. Anordnung zur Detektion von Kohlenwasserstoffen, insbesondere von Öl, in wasserdurchströmten Rohrsystemen (1) durch die Bestimmung des Transmissionsverhaltens eines Lichtstrahles,
**dadurch gekennzeichnet**, daß in das Rohrleitungssystem (1) durch Verbindungsstücke (2) eine rohrförmige Meßanordnung eingebracht ist, die aus einem verspiegelten Rohrteil (3) und einem mit Retroreflexfolie an der Innenseite versehenen Rohrteil (4) besteht, und daß an dem verspiegelten Rohrteil (3) ein lichtdurchlässiges Fenster (5) angebracht ist, durch das der Lichtstrahl (7) einer Lichtquelle (6) in das Rohr (3) einstrahlt und an der verspiegelten Rohrwand (3) mehrfach reflektiert wird, bis es auf die Retroreflexfolie (4) trifft, von der er geringfügig aufgeweitet in Einfallsrichtung zurückreflektiert wird und nach mehrfacher Reflexion am Rohrteil (3) durch das Fenster (5) und durch eine optische Anordnung (9) zu einem Photosensor (8) gelangt, der mit einer Auswerteeinheit (10) verbunden ist.

2. Anordnung nach Anspruch 1, **dadurch gekennzeichnet**, daß die Meßanordnung direkt in das Rohrleitungssystem (1) eingebracht ist.

3. Anordnung nach Anspruch 1, **dadurch gekennzeichnet**, daß die Meßanordnung als Beipaß an dem Rohrleitungssystem (1) angeordnet ist.

4. Anordnung nach einem oder mehreren der Ansprüche 1 bis 3, **dadurch gekennzeichnet**, daß die Lichtquelle (6) mit einer Lichtwellenlänge abstrahlt, die vorzugsweise von dem zu detektierenden Fremdstoff absorbiert wird.

5. Anordnung nach einem oder mehreren der Ansprüche 1 bis 4, **dadurch gekennzeichnet**, daß das lichtdurchlässige Fenster (5) eine Filterwirkung hat, so daß es nur für ein oder mehrere ausgewählte Wellenlängen durchlässig ist.

6. Anordnung nach einem oder mehreren der Ansprüche 1 bis 5, **dadurch gekennzeichnet**, daß die Länge des mit Retroreflexfolie versehenen Rohrteiles (4) auf die Rohrgeometrie des bestehenden Rohrleitungssystemes (1) und den Einfallswinkel des Lichtstrahles (7) abgestimmt ist.

## Claims

1. An arrangement for detecting hydrocarbons, in particular oil, in pipeline systems (1) through which water passes, by determining the transmission characteristic of a light beam, characterised in that a tubular measuring arrangement is introduced into the pipeline system (1) by means of couplings (2), which tubular measuring arrangement consists of a mirrored tubular section (3) and a tubular section (4) provided internally with a retro-reflective film, and that a transparent window (5) is placed at the mirrored tubular section (3), through which the light beam (7) of a light source (6) is radiated into the pipe (3) and is reflected several times at the mirrored wall of the pipe (3), until it strikes the retro-reflective film (4), from which, slightly widened, it is reflected back in the axis of incidence and after multiple reflection at the tubular section (3), reaches a photo-sensor (8), that is connected to an evaluation unit (10), via the window (5) and an optical arrangement (9).

2. Arrangement according to Claim 1, characterised in that the measuring arrangement is installed directly into the pipeline system (1).

3. Arrangement according to Claim 1, characterised in that the measuring arrangement is arranged as a bypass on the pipeline system (1).

4. Arrangement according to one or more of Claims 1 to 3, characterised in that the light source (6) radiates at an optical wavelength that is preferably absorbed by the foreign matter to be detected.

5. Arrangement according to one or more of Claims 1 to 4, characterised in that the transparent window (5) has a filtering effect so that it is transparent only to one or more selected wavelengths.

6. Arrangement according to one or more of Claims 1 to 5, characterised in that the length of the tubular section (4) provided with retro-reflective film is adapted to the pipe geometry of the existing pipeline system (1) and to the angle of incidence of the light beam (7).

## Revendications

1. Dispositif pour la détection d'hydrocarbures, notamment l'huile, dans des systèmes de conduites (1) parcourues par de l'eau, au moyen de la détermination du comportement de transmission d'un faisceau de lumière, caractérisé en ce que dans le système de conduite tubulaire (1) est inséré, au moyen d'éléments de raccordement (2), un dispositif tubulaire de mesure, qui est constitué par un élément tubulaire métallisé (3) et un élément tubulaire (4) dont la face intérieure est pourvue d'une feuille rétroréfléchissante, et que dans l'élément tubulaire métallisé (3) est aménagée une fenêtre transparente (5), par laquelle le faisceau de lumière (7) d'une source de lumière (6) pénètre dans le tube (3) et est réfléchie de façon multiple sur la paroi métallisée (3) du tube, jusqu'à ce qu'il rencontre la feuille rétroréfléchissante (4), par laquelle il est réfléchi , en étant légèrement étalé, dans la direction d'incidence et parvient, après des réflexions multiples sur l'élément tubulaire (3), en traversant la fenêtre (5) et un dispositif optique (9), sur un capteur photosensible (8), qui est relié à une unité d'évaluation (10).

2. Dispositif selon la revendication 1, caractérisé en ce que le dispositif de mesure est monté directement dans le système de conduite tubulaire (1).

3. Dispositif selon la revendication 1, caractérisé en ce que le dispositif de mesure est monté en tant que dispositif by-pass sur le système de conduite tubulaire (1).

4. Dispositif selon une ou plusieurs des revendications 1 à 3, caractérisé en ce que la source de lumière (6) émet avec une longueur d'onde de la lumière qui est de préférence absorbée par la substance étrangère à détecter.

5. Dispositif selon une ou plusieurs des revendications 1 à 4, caractérisé en ce que la fenêtre transparente (5) a une action de filtre de sorte qu'elle ne laisse passer qu'une ou plusieurs longueurs d'onde sélectionnées.

6. Dispositif selon une ou plusieurs des revendications 1 à 5, caractérisé en ce que la longueur de l'élément tubulaire (4) pourvu de la feuille rétroréfléchissante est adaptée à la géométrie cylindrique du système de conduite tubulaire (1) existant et à l'angle d'incidence du faisceau de lumière (7).
